## Europäisches Patentamt
## European Patent Office
## Office européen des brevets

(11) Publication number: **0 049 901**
**B1**

(12) **EUROPEAN PATENT SPECIFICATION**

(45) Date of publication of patent specification: **16.01.85**

(51) Int. Cl.⁴: **B 60 S 1/08**

(21) Application number: **81108281.7**

(22) Date of filing: **13.10.81**

(54) **A wiper device for an automotive vehicle.**

(30) Priority: **13.10.80 JP 141968/80**

(43) Date of publication of application:
**21.04.82 Bulletin 82/16**

(45) Publication of the grant of the patent:
**16.01.85 Bulletin 85/03**

(84) Designated Contracting States:
**DE FR GB**

(56) References cited:
**DE-A-2 549 642**
**DE-C- 713 388**
**GB-A-1 573 900**
**GB-A-1 574 650**
**GB-A-2 039 084**

(73) Proprietor: **NISSAN MOTOR COMPANY, LIMITED**
**No.2, Takara-cho, Kanagawa-ku**
**Yokohama-shi Kanagawa-ken 221 (JP)**

(73) Proprietor: **ICHIKO INDUSTRIES LIMITED**
**10-18, Higashigotanda 5-chome**
**Shinagawa-ku Tokyo (JP)**

(72) Inventor: **Tamura, Takeo**
**1951-59, Tokaichiba-machi**
**Midori-ku Yokohama-shi Kanagawa-ken (JP)**
Inventor: **Hara, Hiroshi**
**31-7, Natsumi 2-chome**
**Funabaschi-shi Chiba-ken (JP)**
Inventor: **Kido, Takayoshi**
**Tamura-Danchi 1638 5214-5, Tamura**
**Hiratsuka-shi Kanagawa-ken (JP)**

(74) Representative: **Patentanwälte TER MEER - MÜLLER - STEINMEISTER**
**Triftstrasse 4**
**D-8000 München 22 (DE)**

Courier Press, Leamington Spa, England.

## Description

The invention relates to a wiper device for an automotive vehicle comprising a first wiper assembly, a first reversible driving motor driving said first wiping assembly and a first detector adapted to detect the both motion ends of said first wiping assembly, a second wiping assembly, a second motor and a second detector with the same functions as said first parts, and a control circuit assembly comprising a switching circuit response to a switching signal to reverse the polarity of the voltage supplied to said motors when both detectors detect motion ends of both of said wiper assemblies, to supply said switching signal.

A wiper device of such construction is known from GB—A 2 039 084. The control circuit assembly is designed as a microcomputer energizing the motors such that all motors come to a standstill in the one and/or the other end position and start again only when the slowest motor approaches its respective end position. Due to the microcomputer the known wiper device is effective but very expensive.

It is the object of the present invention to provide a wiper device which is also very efficient in synchronizing the action of two wiper assemblies, especially for cleaning of an automotive windshield, but which is of simple and cheap construction.

This problem is solved by a wiper device wherein the control circuit assembly comprises a first control circuit including the first switching means for controlling said first motor and a second control circuit including the second switching means for controlling said second motor, and said first and said second detectors are connected to each other in series to detect that both wiper assemblies have reached their respective motion ends.

Due to the series connection of the two detectors it became easy to detect the condition of both wiping assemblies having reached respective motion ends. The signal indicating that condition is used as switching signal to switch two individual control circuits of the same simple construction. Due to the simple set-up of the wiper device as a whole, such device is reliable and cheap.

Other objects and advantages of the invention are disclosed in the following detailed description of the preferred embodiment.

The description is made with reference to drawings, in which:

Fig. 1 is a schematic block diagram of a preferred embodiment of a drive circuit for the wiper device according to the present invention; and

Fig. 2 is a circuit diagram of a driving circuit of Fig. 1.

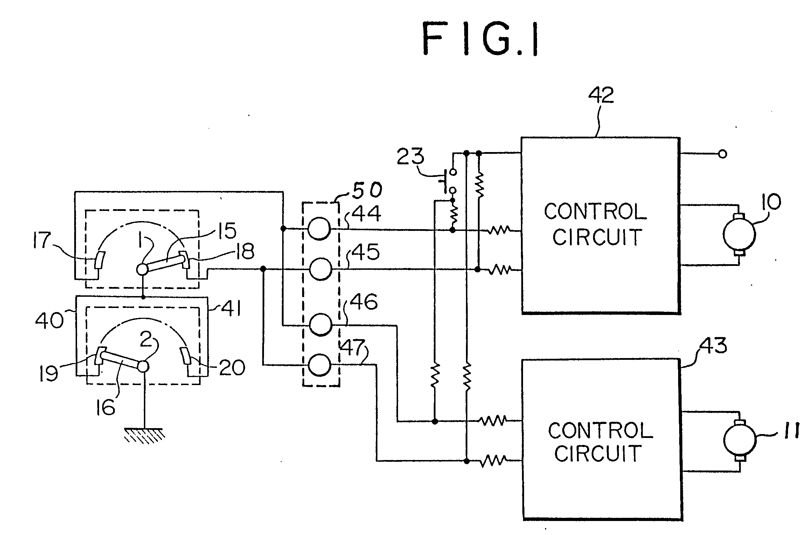

Referring now to Fig. 1, there is illustrated, in a form of block diagram, a preferred embodiment of a driving circuit for a pair of wiper assemblies according to the present invention.

Generally, each of the wiper assemblies comprises wiper arm (not shown) and wiper blade (not shown) mounted at the free end of the wiper arm. The wiper arms are secured to a drive shafts 1 and 2 of reversible motors 10 respectively. A differential gear assembly (not shown) may be interpositioned between the motor shaft and the wiper arm for adjusting the motion speed of the wiper assembly.

Movable switch members 15 and 16 are respectively secured onto the drive shaft 1 and 2 of the reversible motor 10 for motion with the wiper assembly. On the orbits of respective end portions of the movable switch members 15 and 16 remote from the drive shafts, there are provided pairs of stationary switch members 17 to 20. Each pair of stationary switch members 17 to 20 are arranged so that they define respective ends of the wiper assembly motion.

The movable switch member 15 is connected to stationary switch members 19 and 20 via lines 40 and 41. The movable switch member 16 is grounded. In turn, the stationary switch members 17 and 18 are connected to drive control circuits 42 and 43 via lines 44 to 47. Therefore, if either one of the movable switch member 15 or 16 comes to contact with one of the stationary contacts 17 to 20, the driving direction of the reversible motor 10 is still maintained and may not be altered. When both movable switch member 15 and 16 contact to respectively corresponding stationary switch members 17 or 18 and 19 or 20, then, the drive control circuits 42 and 43 become operative to reverse the driving direction.

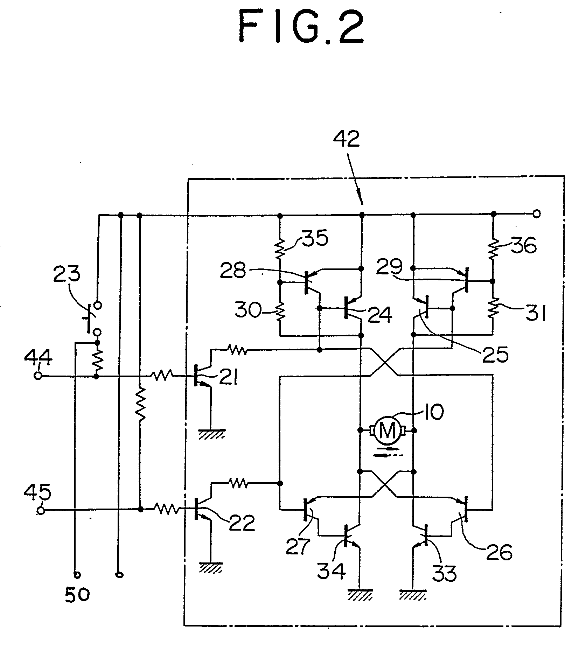

Now going to more detail of the drive control circuit of in Fig. 1 with reference to Fig. 2, there is shown the preferred connected with base electrodes of switching transistors 21 and 22. The base electrodes of the switching transistors 21 and 22 are respectively connected to a power source 50 via a driving switch 23 and bias resistors. The collector electrodes of the transistors 21 and 22 are connected to base electrodes of transistors 24 and 25 and base electrodes of transistors 26 and 27, respectively. The transistors 24 to 27 are of P—N—P type transistors. The collector electrodes of the transistors 24 and 25 are connected with base embodiment of the drive control circuits 42 and 43. Since the drive control circuits 42 and 43 have substantially the same construction, hereinafter and in Fig. 2 is illustrated only the drive control circuit 42. The drive control circuit 43 should be understood that the circuit construction and function thereof is same as that disclosed hereafter.

As set forth, the stationary contacts 17 and 18 are connected the drive control circuit 42 via the lines 44 and 45. The lines 44 and 45 are respectively electrodes of the transistors 28 and 29 through bias resistor 30 and 31. The emitter electrodes of the transistors 24, 25, 28 and 29 are connected with a power source 50 and therefore, are applied electric power. On the other hand, the collector electrodes of the transistors 26 and 27 are connected with base electrodes of transistors 33 and 34. Also, the emitter electrodes of the transistors 27 and 26 are connected with the collector electrodes of the transistors 33 and 34.

In Fig. 2, reference numerals 35 and 36 denote bias resistors which are respectively associated with bias resistors 30 and 31 so that either one of coupled bias resistors 30 and 35 or 31 and 36 bias the corresponding transistor 28 or 29.

Now, by turning on of the drive switch 23, power is applied to terminals 46 and 47. In the initial position of the wiper assembly, the movable switch member 15 contacts with the stationary switch member 18 and the movable switch member 16 contacts with the stationary switch member 19. Therefore, the power applied to the terminal 47 is grounded through the stationary switch member 18, the movable switch member 15, the stationary switch member 19 and the movable switch member 16. Therefore, the potential on the base electrode of the transistor 22 goes low to turn off the same. On the other hand, the potential on the terminal 46 is applied to the base electrode of the transistor 21 to turn on the same. In response to turning on of the transistor 21, potential on the base electrode of the transistors 24 and 26 drops to result in turning on of both transistors. At this time, the transistors 28 and 33 also become on. As the result, current flows through the transistor 24, the motor 10 and the motor in the first direction in which the movable switch member 15 rotates about its pivot to the stationary switch member 17 together with the wiper assembly.

Just the same electric function is taken place in the drive control circuit 43 for the motor of the other wiper assembly. According to the motor rotation in the first direction, the movable switch member 16 rotates about its axis in the direction towards the stationary switch member 20.

The rotation of the motors 10 are transmitted to the drive shafts 1 and 2 through the differential gears to drive the drive shafts 1 and 2 in clockwise direction. The wiper arms are thereby driven by the drive shafts 1 and 2 in clockwise. The wiper arms are thus rotated in the clockwise. At the same time, the movable switch members 15 and 16 are rotated away from the stationary switch members 18 and 19. By this, power is applied both to the transistors 21 and 22 and thereby, the transistor 22 is turned on. At this time, since voltage of the emitter electrodes of the transistors 26 and 27 is approximate to zero, the transistors 26 and 27 are maintained in off position in spite of turning on of the transistor 22. Thus, current is kept flowing through the transistor 24, the motor 10 and the transistor 33 until the wiper blade reaches the end of the motion and thereby the movable switch members 15 and 16 contact the stationary switch members 17 and 20, respectively.

At the end of the wiper assemblies motion in the first direction, the movably switch members 15 and 16 come to contact with the stationary switch members 17 and 20 respectively. Thus, the potential on the terminal 41 is grounded through the stationary switch member 17, the movable switch member 15, the stationary switch member 20 and the movable switch member 16. Therefore, the potential on the base electrode of the transistor 21 goes low to turn off the same.

In response to turning off of the transistor 21, the transistors 24 and 26 turn off. Therefore, the transistors 25, 27 and 34 turn on. By this, current flows through the transistors 25, the motor 10 and the transistor 34 to drive the motor in the second direction opposite to the first direction. In response to switching of driving direction of the motor 10, the wiper assemblies and the movable switch members 15 and 16 rotate in the second direction, i.e. counterclockwise. The motor 10 is kept in driving in the second direction until the movable switch members 15 and 16 reach to contact with the stationary switch members 18 and 19. By repeating the above-mentioned switching operation, the wiper assemblies can be driven in first and second directions alternatively.

As apparent from the foregoing, if either one of the movable switch members 15 and 16 come to contact with the stationary switch members 17 to 20 before the other movable switch member reaches to the stationary switch member corresponding thereto, the potential on the base electrode of the transistors 21 and 22 are maintained high. Therefore, switching of the driving directions of the driving motors 10 is always carried out when both of the movable switch members 15 and 16 contact to the stationary contacts.

If the driving switch 23 is turned off while the wiper assemblies and the movable switch members 15 and 16 rotate in the first direction, the transistor 21 becomes inoperative in response to cut off of the driving switch 23 to turn off the transistors 24, 25 and 33.

At this time, the transistor 22 is also turned off by applying the power but the transistors 26, 27 and 34 are maintained in off position by keeping the emittor voltage approximate zero. In response to turning off of the transistors 24 and 25, the transistors 26, 27 and 34 turn on to permit current flowing through the transistor 26, the motor 10 and the transistor 34 to drive the motor in the second direction. Thus, the wiper assemblies and the movable switch members 15 and 16 rotate counterclockwise until the movable switch members reaches to contact with the stationary switch members 18 and 19. When the movable switch members 15 and 16 contacts with the contacts 18 and 19, power applied to the transistor 22 is grounded through the movable switch members 15 and 16 and the stationary switch members 18 and 19 to stop the wiper motion.

## Claims

1. A wiper device for an automotive vehicle comprising
 — a first wiper assembly (1),
 — a first reversible driving motor (10) driving said first wiping assembly and
 — a first detector (15, 17, 18) adapted to detect both motion ends of said first wiping assembly,
 — a second wiping assembly (2), a second motor (11) and a second detector (16, 19, 20) with the same functions as said first parts, and
 — a control circuit assembly (42, 43) comprising a switching circuit (21, 22, 24—36) responsive to a switching signal to reverse the polarity of the voltage supplied to said motors when both detectors detect motion ends of both of said wiper assemblies, to supply said switching signal, characterized in that
 — said control circuit assembly comprises a first control circuit (42) including said first switching means (21, 22, 24—36) for controlling said first motor (10) and a second control circuit (43) including said second switching means for controlling said second motor (11) and
 — said first and said second detectors are connected to each other in series to detect that both wiper assemblies (1, 2) have reached motion ends.

2. The wiper device as set forth in claim 1, characterized by a holding means (21, 22, 24—36) for maintaining direction of power supply when one of said detectors (15, 17, 18; 16, 19, 20) detects the motion end of the corresponding wiper assembly (1 or 2) in one direction and the other does not detect the motion end in said one direction of travel of the other wiper assembly (2 or 1), whereby said holding means feeds said switching signal to said switch means (21, 22, 24—36), when detecting the motion ends of both wiper assemblies.

3. The wiper device as set forth in claim 1 or 2, characterized in that each of said first and second detectors comprises an electrically conductive movable switch member (15; 16), each associated with the corresponding wiper assembly (1, 2) for movement therewith, pairs of stationary conductive terminals (17, 18; 19, 20) respectively located at the positions corresponding to respective motion ends of the corresponding wiper assembly (1, 2), whereby said movable switch members (15; 16) are adapted to contact with one of said stationary terminals (17, 18; 19, 20) at each motion end of said wiper assembly (1, 2).

4. The wiper device as set forth in claim 3, wherein said movable switch member (15; 16) of said first detector is connected in series to said stationary terminals (19, 20) of said second detector.

5. The wiper device as set forth in claim 4, characterized in that said first and second circuits (42, 43) are both connected to said first detector (15, 17, 18).

6. The wiper device as set forth in any one of claims 1 to 5, characterized in that said switch means are set up of transistors (21, 22, 24—36), said transistors (21, 22, 24—36) being arranged so as to be turned on and off in response to said switching signals for alternating polarity of power supply.

7. The wiper device as set forth in claim 6, characterized in that said each set of transistors comprises a switching transistor (21, 22) connected to said first detector (15, 17, 18) to be turned on in response to said switching signals and transistors (24—36) arranged for serving as flip-flop for alternating on-position and off-position each time said switching transistor (21, 22) turns on.

## Patentansprüche

1. Wischer-Einrichtung für einen Kraftwagen, mit
 — einem ersten Wischer (1),
 — einem ersten Antriebsmotor (10) zum Antreiben des ersten Wischers (1) in entgegengesetzten Richtungen,
 — einem ersten Detektor (15, 17, 18) zur Erfassung beider Bewegungsendstellungen des ersten Wischers (1),
 — einem zweiten Wischer (2), einem zweiten Antriebsmotor (11) und einem zweiten Detektor (16, 19, 20) mit denselben Funktionen wie die entsprechenden ersten Teile, und mit
 — einer Steuerschaltungseinrichtung, die eine auf ein Umschaltsignal ansprechende Umschaltsteuerung (21, 22, 24—36) zur Umkehrung der Polarität der den Antriebsmotoren (10, 11) zugeführten Spannung besitzt, wobei das Umschaltsignal dann erzeugt wird, wenn beide Detektoren (15, 17, 18; 16, 19, 20) Bewegungsendstellungen beider Wischer (1, 2) detektieren, dadurch gekennzeichnet, daß
 — die Steuerschaltungseinrichtung eine erste Steuerschaltung (42) mit einer ersten Umschaltsteuerung (21, 22, 34—36) zur Steuerung des ersten Antriebsmotors (10) und eine zweite Steuerschaltung (43) mit einer zweiten Umschaltsteuerung zur Steuerung des zweiten Antriebsmotors (11) enthält, und daß
 — der erste und zweite Detektor (15, 17, 18; 16, 19, 20) miteinander elektrisch in Reihe geschaltet sind, um zu detektieren, daß beide Wischer (1, 2) Bewegungsendstellungen erreicht haben.

2. Wischer-Einrichtung nach Anspruch 1, gekennzeichnet durch eine mit der Umschaltsteuerung (21, 22, 24—36) verbundene Halteschaltung zur Aufrechterhaltung der Stromversorgungsrichtung, wenn einer der Detektoren (15, 17, 18; 16, 19, 20) die Bewegungsendstellung eines Wischers (1, 2) in einer Richtung detektiert, und der andere Detektor die Bewegungsendstellung des sich in gleicher Richtung bewegenden anderen Wischers noch nicht detektiert, wobei die Halteschaltung das Umschaltsignal der Umschaltsteuerung (21, 22, 24—36) zuführt, wenn die Bewegungsendstellungen beider Wischer (1, 2) detektiert sind.

3. Wischer-Einrichtung nach Anspruch 1 oder 2, dadurch gekennzeichnet, daß jeder der ersten und zweiten Detektoren ein elektrisch leitfähiges bewegbares Schaltglied (15, 16) enthält, das mit dem entsprechenden Wischer (1, 2) verbunden ist und an dessen Bewegung teilnimmt, daß pro Wischer (1, 2) zwei stationäre, elektrisch leitfähige Kontaktbereiche (17, 18; 19, 20) vorhanden sind, von denen jeweils einer im Bereich einer Bewegungsendstellung angeordnet ist, und daß die bewegbaren Schaltglieder (15, 16) so ausgebildet sind, daß sie die im Bereich der Bewegungsendstellung der Wischer liegenden Kontaktbereiche kontaktieren.

4. Wischer-Einrichtung nach Anspruch 3, dadurch gekennzeichnet, daß das bewegbare Schaltglied (15) des ersten Detektors mit den stationären Kontaktbereichen (19, 20) des zweiten Detektors elektrisch in Reihe geschaltet ist.

5. Wischer-Einrichtung nach Anspruch 4, dadurch gekennzeichnet, daß sowohl die erste als auch die zweite Steuerschaltung (42, 43) mit dem ersten Detektor (15, 17, 18) verbunden sind.

6. Wischer-Einrichtung nach einem der Ansprüche 1 bis 5, dadurch gekennzeichnet, daß die Umschaltsteuerungen durch Transistoren gebildet sind, die in Abhängigkeit des Umschaltsignals zur wechselweisen Änderung der Stromversorgungsrichtung ein- und ausschaltbar sind.

7. Wischer-Einrichtung nach Anspruch 6, dadurch gekennzeichnet, daß jeder Transistorsatz einer Umschaltsteuerung einen mit dem ersten Detektor (15, 17, 18) verbundenen und in Abhängigkeit des Umschaltsignals einschaltbaren Schalttransistor (21, 22) sowie weitere Transistoren (24—29, 33, 34) besitzt, die als Flip-Flop geschaltet sind, das mit jedem Einschalten des Schalttransistors (21, 22) zwischen einem Einschalt- und einem Ausschaltzustand umschaltbar ist.

## Revendications

1. Dispositif essuie-glace pour un véhicule automobile comprenant:
un premier assemblage d'essuie-glace (1),
un premier moteur réversible d'entraînement (10) entraînant ledit premier assemblage d'essuie-glace et
un premier détecteur (15, 17, 18) pouvant détecter les deux fins de mouvement dudit premier assemblage d'essui-glace,
un second assemblage d'essuie-glace (2), un second moteur (11) et un second détecteur (16, 19, 20) ayant les mêmes fonctions que les premières pièces, et

un ensemble formant circuit de commande (42, 43) comprenant un circuit de commutation (21, 22, 24—36) répondant à un signal de commutation pour inverser la polarité de la tension appliquée auxdits moteurs lorsque les deux détecteurs détectent les fins de mouvement desdits deux ensembles d'essuie-glace, pour fournir ledit signal de commutation,
caractérisé en ce que ledit ensemble formant circuit de commande comprend un premier circuit de commande (42) ayant ledit premier moyen de commutation (21, 22, 24—36) pour commander le premier moteur (10) et un second circuit de commande (43) comprenant le second moyen de commutation pour commander le second moteur (11) et
les premier et second détecteurs sont connectés l'un à l'autre en série pour détecter que les deux ensembles d'essuie-glace (1, 2) ont atteint les fins de leur mouvement.

2. Dispositif essuie-glace selon la revendication 1, caractérisé par un moyen de maintien (21, 22, 24—36) associé audit moyen de commutation (21, 22, 34—36) pour maintenir la direction de l'alimentation en courant lorsque l'un desdits détecteurs (15, 17, 18; 16, 19, 20) détecte la fin du mouvement de l'assemblage d'essuie-glace correspondant (1 ou 2) dans une direction et que l'autre ne détecte pas la fin du mouvement dans ladite direction de parcours de l'autre assemblage d'essuie-glace (2 ou 1), ledit moyen de maintien appliquant ledit signal de commutation audit moyen de commutation (21, 22, 24—36) lors de la détection des fins de mouvement des deux assemblages d'essuie-glace.

3. Dispositif essuie-glace selon la revendication 1 ou 2, caractérisé en ce que chacun desdits premier et second détecteurs comprend un organe mobile électriquement conducteur de commutation (15; 16), chacun étant associé á l'assemblage d'essuie-glace correspondant (1, 2) pour un mouvement avec lui, des paires de bornes stationnaires conductrices (17, 18; 19, 20) se trouvant respectivement aux positions correspondant aux fins respectives de mouvement de l'assemblage d'essuie-glace correspondant (1, 2), ainsi lesdits organes mobiles de commutation (15; 16) sont adaptés à venir en contact avec l'une desdites bornes stationnaires (17, 18; 19, 20) à chaque fin de mouvement dudit assemblage d'essuie-glace (1, 2).

4. Dispositif essuie-glace selon la revendication 3, où ledit organe mobile de commutation (15; 16) dudit premier détecteur est connecté en série auxdites bornes stationnaires (19, 20) dudit second détecteur.

5. Dispositif essuie-glace selon la revendication 4, caractérisé en ce que les premier et second circuits (42, 43) sont tous deux connectés au premier détecteur (15, 17, 18).

6. Dispositif essuie-glace selon l'une quelconque des revendications 1 à 5, caractérisé en ce que lesdits moyens de commutation sont formés de transistors (21, 22, 24—36), lesdits transistors (21, 22, 24—36) étant agencés afin d'être mis en circuit et hors circuit en réponse aux signaux de commutation pour alterner la polarité de l'alimentation en courant.

7. Dispositif essuie-glace selon la revendication 6, caractérisé en ce que chaque groupe de transistors comprend un transistor de commutation (21, 22) relié audit premier détecteur (15, 17, 18) pour être mis en circuit en réponse aux signaux de commutation et des transistors (34—36) agencés pour servir de flip-flop pour alterner la position en circuit et la position hors circuit à chaque fois que ledit transistor de commutation (21, 22) devient conducteur.

FIG.1

CONTROL CIRCUIT

CONTROL CIRCUIT

10

11

42

43

23

50

44

45

46

47

15

18

17

41

40

20

16

19

1

F I G.2

0 049 901

2